# EUROPÄISCHE PATENTSCHRIFT

(11) **EP 1 048 125 B1**
(45) Veröffentlichungstag und Bekanntmachung des Hinweises auf die Patenterteilung: **05.11.2003**
(21) Anmeldenummer: 99941614.2
(22) Anmeldetag: 13.08.1999
(51) Int. Cl.: H04B 1/40, H04B 1/26

(54) **VERFAHREN ZUM EMPFANG VERSCHIEDENARTIGER FUNKSTANDARDS**
METHOD FOR RECEIVING RADIO SIGNALS OF DIFFERENT STANDARDS
PROCEDE DE RECEPTION DE SIGNAUX RADIO DE DIFFERENTES NORMES

(30) Priorität: 22.08.1998 DE 19838244
(43) Veröffentlichungstag der Anmeldung: 02.11.2000
(73) Patentinhaber: DaimlerChrysler AG, 70567 Stuttgart (DE)
(72) Erfinder: MÜLLER, Thomas, D-89075 Ulm (DE)
(86) Internationale Anmeldenummer: EP9905951
(87) Internationale Veröffentlichungsnummer: WO00011797

(56) Entgegenhaltungen:
- EP-A- 0 856 952
- WO-A-96/28946
- WO-A-97/14056
- WO-A-99/31812

## Beschreibung

Die Erfindung bezieht sich auf ein Verfahren zum Empfang verschiedenartiger Funkstandards nach dem Oberbegriff des Patentanspruchs 1.

Aus der WO99/31812 A1 und der WO97/14056 A1 sind Empfänger bekannt, welche mehrere verschiedene Funkstandards empfangen können. Dabei wird durch entsprechende Schalter entweder der Empfang des einen Funkstandards oder der Empfang des anderen Funkstandards bei aufwendigen Empfängerstrukturen ermöglicht.

Die Signalübertragung im Bereich der Mobilkommunikation (GSM, DCS 1800) und Satellitennavigation (GPS) beruht auf unterschiedlichen Funkstandards (Modulationsarten, Signalbandbreiten), die mit Hilfe von Empfängern verarbeitet werden müssen. Besonderes Gewicht liegt auf einer kombinierten Verarbeitung der Signale. Bisherige Lösungen beschränken sich auf eine getrennte Verarbeitung mit jeweils getrennten Empfängerstrukturen, die mittels eines Rechners kombiniert werden. Wünschenswert in diesem Zusammenhang wäre ein Empfänger, welcher sich unterschiedlichen Funkstandards als sogenannter Multimode-Empfänger anpassen kann.
Bisherige klassische Architekturen in Heterodyn-Empfänger oder Digital-Empfänger weisen bei entsprechend hohen Anforderungen an die Dynamik Anpassungsprobleme auf.

Aus der internationalen Patentanmeldung WO 96/28946 A1 ist ein Sendeempfangssystem bekannt, das mittels eines Breitbanddigitalempfängers den gleichzeitigen Empfang von Signalen verschiedenster Funkstandards und deren spätere Signalverarbeitung erlaubt. Dabei werden die empfangenen Signale kanalselektiv verarbeitet. Weiterhin ist aus der internationalen Patentanmeldung WO 99/31812 A1 ein Verfahren zum gleichzeitigen Empfang von Signalen verschiedener Funkstandards, eines CDMA-codierten Signals und eines GPS-Signals bekannt. Dabei werden die beiden verschiedenen Signale über eine Antenne empfangen, signalspezifisch entweder einem GPS-Filter oder einem CDMA-Filter zugeführt, anschließend einem gemeinsamen Breitbandverstärker zugeführt und die superpositionierten Signale anschließend in einen Zwischenfrequenzbereich umgesetzt und anschließend weiterverarbeitet.

Der Erfindung liegt die Aufgabe zugrunde, ein Verfahren anzugeben, bei dem die Verarbeitungseffizienz von Funksignalen gesteigert wird.

Die Erfindung wird durch die Merkmale des Patentanspruchs 1 wiedergegeben. Die weiteren Ansprüche enthalten vorteilhafte Aus- und Weiterbildungen der Erfindung.

Die Erfindung beinhaltet ein Verfahren, bei dem die Addition eines CDMA-codierten Signals und eines herkömmlich modulierten Signals auf Zwischenfrequenzebene, zu einer Vereinfachung in den Anforderungen an den Analog-Digital-Wandler und die Zwischenfrequenz-Aufbereitung führt, da das CDMA Signal vor der Dekorrelation unter dem Grundrauschen liegen darf und erst durch die spätere Dekorrelation aus dem Rauschen N₀ gehoben wird.

Ein besonderer Vorteil der Erfindung besteht darin, daß gegenüber herkömmlichen Systemen weniger Hardware-Komponenten benötigt werden. Dabei können sowohl A/D-Wandler bis hin zu Mischer und Filter eingespart werden.

Im folgenden wird die Erfindung anhand von vorteilhaften Ausführungsbeispielen unter Bezugnahme auf schematische Zeichnungen in den Figuren näher erläutert. Es zeigen:
- Fig. 1: Pegel von unterschiedlichen Signalen am Beispiel GPS und DAB,
- Fig. 2: Addition nach der ersten Mischerstufe

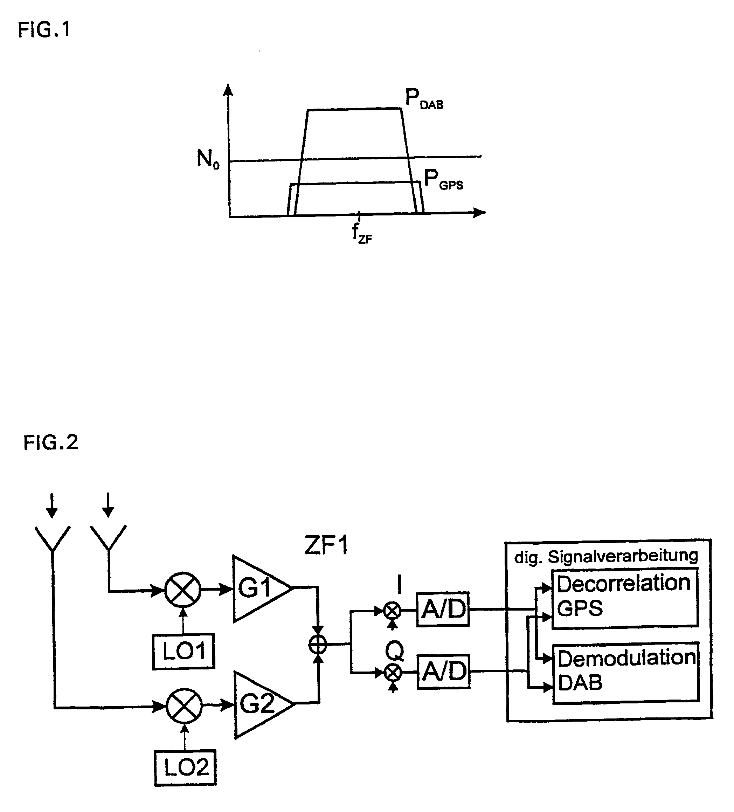

In einem ersten Ausführungsbeispiel gemäß Fig. 1 wird der Pegel von unterschiedlichen Signalen am Beispiel GPS und DAB dargestellt. Die Addition eines CDMA-kodierten Signals und eines herkömmlich modulierten Signals wird auf Zwischenfrequenzebene durchgeführt. Dabei liegt das CDMA Signal vor der Dekorrelation unter dem Grundrauschen und wird erst durch die spätere Dekorrelation aus dem Rauschen N₀ gehoben.

In einem zweiten Ausführungsbeispiel gemäß Fig. 2 werden Hochfrequenzsignale von zwei getrennten Mischern LO1 und LO2 auf die gleiche Zwischenfrequenz heruntergemischt. Die Verstärkungsfaktoren G1 und G2 der beiden Zweige werden so gewählt, daß das CDMA-Signal - beispielsweise ein GPS-Signal- das andere Signal - beispielsweise ein OFDM-kodiertes DAB-Signal- nicht stört. Erst die digitale Signalverarbeitung nach der Analog-Digital-Wandlung A/D trennt beide Signalanteile wieder und hebt das GPS-Signal durch Dekorrelation aus dem Rauschen. Dabei kann die Digitalisierung direkt im Basisband oder direkt bei der Zwischenfrequenz stattfinden.

Es besteht auch die Möglichkeit, als Lokaloszillator die Summe des Ausgangs zweier schmalbandigen Oszillatoren zu verwenden. Bei dieser Ausführungsform steigen jedoch die Anforderungen an die Eingangsfilter etwas an.

Es besteht auch die Möglichkeit, ein spezielles Eingangsfilter zu verwenden, welches die Pegelanpassung a₁ und a₂ und die Bandselektion f₁ und f₂ in integrierter Weise vornimmt. Dadurch reduziert sich der Aufwand vor dem Mischer weiter. Die Dämpfungskoeffizienten in den Durchlaßbändem a₁ und a₂ werden so dimensioniert, daß das CDMA-Signal unter dem Rauschpegel des OFDM-Signals zu liegen kommt.

## Patentansprüche

1. Verfahren zum gleichzeitigen Empfang von Signalen verschiedener Funkstandards, eines CDMA-codierten Signals und wenigstens einem Signal eines anderen Funkstandards,
**dadurch gekennzeichnet,**
- **dass** die Signale in den gleichen Frequenzbereich bei entsprechender Bandbreite umgesetzt werden,
- **dass** eine Superposition mehrerer gleichzeitig empfangener umgesetzter Signale verschiedener Funkstandards durchgeführt wird und
- **dass** eine Trennung derselben durch eine anschließende digitale Signalverarbeitung durchgeführt wird.

2. Verfahren nach Anspruch 1, **dadurch gekennzeichnet, dass** als Lokaloszillator der Mischerstufe die Summe des Ausgangs von zwei schmalbandigen Oszillatoren verwendet wird.

3. Verfahren nach Anspruch 1, **dadurch gekennzeichnet, dass** für jede Modulationsart eine Filter und Verstärkereinheit verwendet wird.

4. Verfahren nach Anspruch 1, **dadurch gekennzeichnet, dass** für alle Modulationsarten ein spezieller HF-Filter mit Pegelanpassung und Bandselektion verwendet wird.

5. Verfahren nach Anspruch 1, **dadurch gekennzeichnet, dass** die Superposition eines CDMA-codierten und eines OFDM-codierten Signals durchgeführt wird.

6. Verfahren nach Anspruch 1, **dadurch gekennzeichnet, dass** vor der Dekorrelation bzw. der Demodulation eine A/D-Wandlung durchgeführt wird.

## Claims

1. Method for simultaneous reception of signals to different radio standards, of a CDMA-coded signal and of at least one signal to a different radio standard,
**characterized**
- **in that** the signals are converted to the same frequency band with a corresponding bandwidth,
- **in that** two or more converted signals which are received at the same time and are to different radio standards are superposed, and
- **in that** these signals are separated by subsequent digital signal processing.

2. Method according to Claim 1, **characterized in that** the sum of the output of two narrowband oscillators is used as a local oscillator for the mixer stage.

3. Method according to Claim 1, **characterized in that** a filter and an amplifier unit are used for each type of modulation.

4. Method according to Claim 1, **characterized in that** a specific RF filter with level matching and band selection is used for all types of modulation.

5. Method according to Claim 1, **characterized in that** a CDMA-coded signal and an OFDM-coded signal are superposed.

6. Method according to Claim 1, **characterized in that** A/D conversion is carried out before decorrelation and/or demodulation.

## Revendications

1. Procédé permettant de recevoir simultanément des signaux appartenant à différentes normes radio, un signal codé AMRC et au moins un signal d'une autre norme radio,
**caractérisé en ce**
- **que** les signaux sont convertis dans la même gamme de fréquences pour une largeur de bande correspondante,
- **qu'**une superposition de plusieurs signaux convertis, reçus simultanément et appartenant à différentes normes radio, est effectuée, et
- **qu'**une séparation de ceux-ci est effectuée par un traitement numérique de signal consécutif.

2. Procédé selon la revendication 1, **caractérisé en ce que** la somme de la sortie de deux oscillateurs à bande étroite est utilisée comme oscillateur local de l'étage du mélangeur.

3. Procédé selon la revendication 1, **caractérisé en ce que** pour chaque type de modulation, un filtre et une unité d'amplification sont utilisés.

4. Procédé selon la revendication 1, **caractérisé en ce que** pour tous les types de modulation, un filtre HF spécial avec adaptation de niveau et sélection de bande est utilisé.

5. Procédé selon la revendication 1, **caractérisé en ce que** la superposition d'un signal codé AMRC et d'un signal codé MROF est effectuée.

6. Procédé selon la revendication 1, **caractérisé en ce qu'**une conversion A/N est effectuée avant la décorrélation ou la démodulation.
